# EUROPEAN PATENT SPECIFICATION

(11) **EP 3 768 445 B1**
(45) Date of publication and mention of the grant of the patent: **14.12.2022**
(21) Application number: 19713983.5
(22) Date of filing: 14.03.2019
(51) Int. Cl.: B21C 47/24, B21C 51/00, B21F 11/00, G01N 1/04, B21C 47/26

(54) **AUTOMATED WIRE ROD TRIMMING STATION**
AUTOMATISCHE WALZDRAHTSCHNEIDSTATION
STATION AUTOMATIQUE DE DÉCOUPE DE FIL MACHINE

(30) Priority: 20.03.2018 US 201862645446 P; 06.09.2018 US 201816123347
(43) Date of publication of application: 27.01.2021
(73) Proprietor: Primetals Technologies USA LLC, Alpharetta, GA 30005 (US)
(72) Inventor: TEEGAVARAPU, Sudhakar, Hopkinton, MA 01748 (US); PALFREMAN, Matthew, D., Massachusetts, MA 01507 (US); ZELLE, Jason, Worcester, MA 01608 (US); SHEN, William, X., Boylston, MA 01505 (US)
(74) Representative: Metals@Linz
(86) International application number: PCT/US2019/022208
(87) International publication number: WO 2019/182850

(56) References cited:
- EP-A2- 0 255 724
- WO-A1-2017/082908
- DE-C1- 19 846 101
- KR-B1- 101 568 593

## Description

### BACKGROUND OF THE INVENTION

The invention relates to the field of wire rod-trimming station, and in particular to an automated trimming system for a coil according to the preamble of claim 1.

Traditionally an inline high speed shear would be utilized to trim the head and tail of each billet "coil" rolled in the mill, the high speed shear is positioned directly before the laying head in the wire rod line and as a result must be able to trim 5.5 mm wire while travelling at 120 - 130 m/s. This results in a complex, machine with a complicated control system requiring high maintenance, and attention to detail to operate it correctly and consistently. Due to the complex nature of this machine it has a high capital cost and has a high operating cost as the machine utilizes two main guides, two motors of 200-300 kW and multiple switch pipes that need changing per material size to be trimmed. Examples of such high speed shear using a conveyor of travelling rings are provided over WO2017082908A1 or EP0255724A2.

At the opposite of such high speed shear for travelling wires, the present invention is based on a more simple static trimming system for a formed coil like in DE19846101C1 forming the basis for the preamble of claim 1 and disclosing an automated trimming system for a coil comprising a number of rings positioned within said coil and sheared positions where the rings need to be cut; the system comprising
- one or more trimming mechanisms ("Trennschere 9") proceed to cut the rings at the sheared positions; and
- a hook arrangement that interfaces with the coil for transferring the coil to a trimming area, once the coil is positioned in the trimming area, two further hooking units ("Stangenelement 12, Haken 12a, Parallelogrammstützen 13") comprising a set of rods in form of pivotable parallelograms are used to separate each ring (6a) at the ends of the coil in order to expose the rings positioned within the one or more trimming mechanisms. Such hooking units are however complex to operate, especially because they require a very fine displacement's control in full synchronization with the trimming mechanisms and each one of the rings to be separated at both ends of the coil.

### SUMMARY OF THE INVENTION

According to one aspect of the invention, there is provided an automated trimming system of the aforementioned kind, configured such that once the coil is positioned in the trimming area the ends of the coil are separated to expose the rings positioned within using a plurality of screw rolls or the one or more trimming mechanisms, the automated trimming system characterized in that it further comprises
- a vision system configured to identify the number of rings positioned within the coil and the sheared positions where the rings need to be cut;
- with the one or more trimming mechanisms of the system being configured to receive the sheared positions.

According to a preferred embodiment, the automated trimming system includes a coil that includes a plurality of rings. One or more trimming mechanisms are configured to select a number of rings from the coil and proceed to form a sample by cutting a portion of the rings. A receiver unit configured to receive the sample from the one or more trimming mechanisms for evaluation of the quality of the sample.

Some dependent claims as well as drawings and their respective description are also provided in relation to some technical advantages of the present invention.

### BRIEF DESCRIPTION OF THE DRAWINGS

FIGs. 1A-1C are schematic diagrams illustrating a first embodiment of a novel trimming station used in conjunction with a coil handling system in accordance with the invention;
FIG. 2 is a schematic diagram illustrating a detailed view of a novel hook arrangement forming part of the invention;
FIGs. 3A-3B are schematic diagrams illustrating a detailed view of a trimming robot forming part of the invention;
FIGs. 4A-4C are schematic diagrams illustrating the various operations of the vision system forming part of the invention;
FIGs. 5A-5C are schematic diagrams illustrating asecond embodiment of the invention displaying the trimming station used in conjunction with a coil handling system; and
FIGs. 6A-6B shows a third embodiment of the invention where a sample of a coil is used to test its quality.

### DETAILED DESCRIPTION OF THE INVENTION

The invention involves an autonomous trimming station to be included in the coil handling area, in this area the coil has already been formed and collected and is either transported on a pallet or hook conveyance to the compactor for tying. Prior to the compactor, a new station will be included to allow the head and the tail of each coil to be trimmed automatically without operator intervention. The trim station will included a side transfer with a unique hook arrangement to allow the ends of the coils to be spread out to enable trimming of the desired number of head and tail end rings, the cutting or trimming of the rings can be made by an autonomous trimming robot, controlled via a vision system interface. The purpose of the vision system is to ensure the correct number of rings is trimmed from each coil.

Performance of a high speed shear depends on mill speed, whereas the current invention is not subjected to such limitations. For example, when mill speed is 120 m/s, the cutting time for a high speed shear is less than 0.05 seconds, whereas the cutting time for the current invention is approximately 45 seconds. With the concept of trimming in the coil handling area the coil can be trimmed while stationary, a single coil may be held stationary from a minimum time of approximately 45 secs and up depending on the production rate of the mill. The invention works within the coil handling system, via a coil down ender which is a standard product if the initial part of the coil handling system is a vertical pallet system.

A custom designed hook arrangement then interfaces with the down ended coil to remove the coil and transfer the coil to the trimming station. The hook incorporates two ring separating devices that fans out the head and tail ends of the coil by a predetermined amount. This fanning may also be carried out by the trimming robot. This fanning of the coil then allows the vision system to then calculate the number of rings separated from the coil and instruct the arms of trimming robots to position the ring/rings to be cut at the shear locations. The rings are cut using a hydraulic, shear and the arms of the trimming robots then remove the discard rings from the hook before the hook places the coil back on the down ender that then up ends the coil so that it may be transferred to the compactor for processing. If the coil is on a hook arrangement the process is similar but the down ending of the coil is not needed and the coil is transferred from hook to hook.

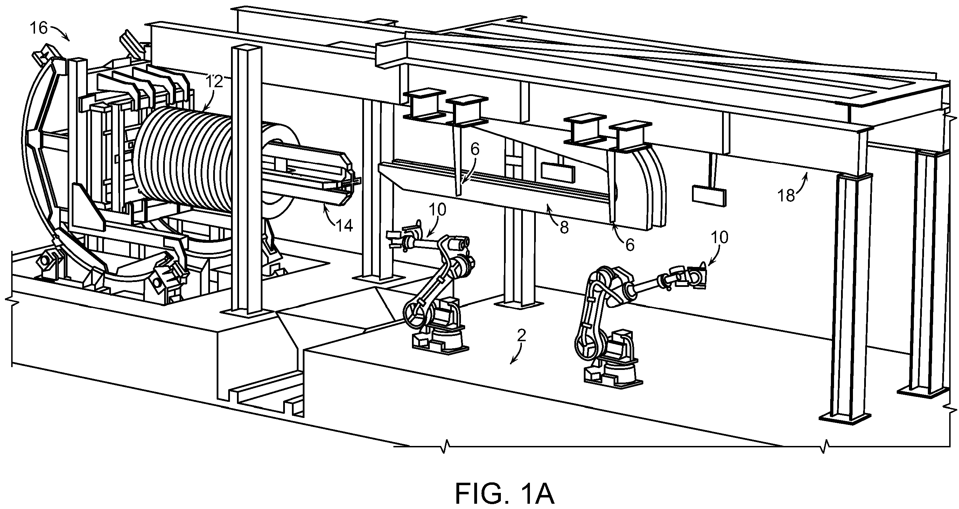

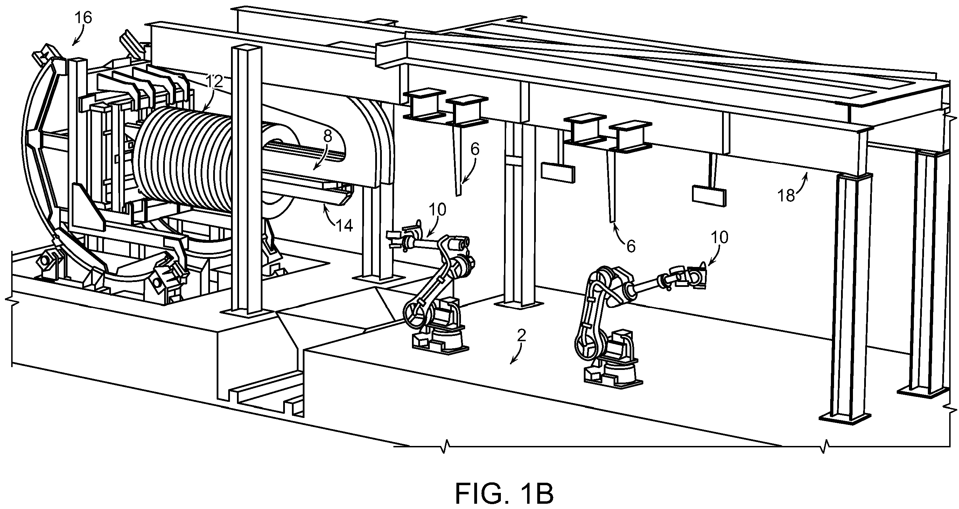

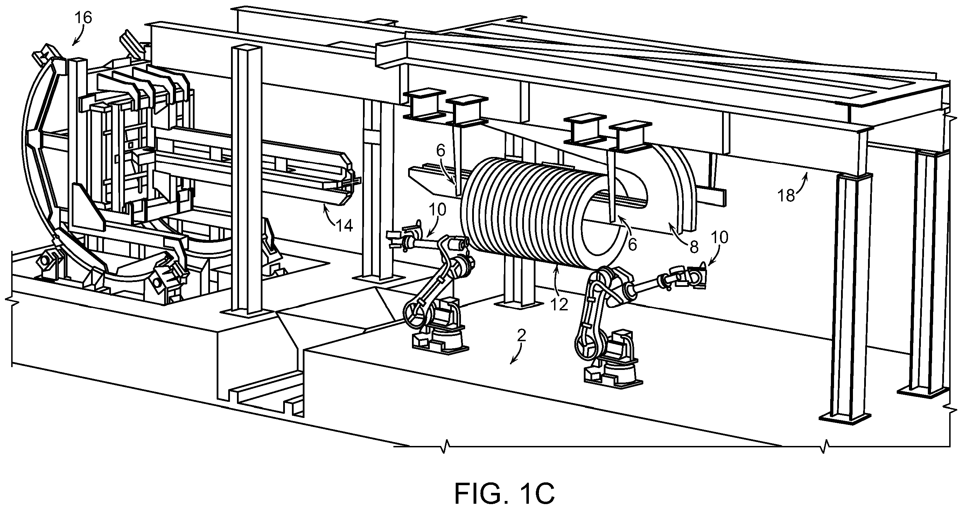

FIGs. 1A-1C are schematic diagrams illustrating the novel trimming station 2 used in accordance with the invention. A coil 12 is positioned on a mandrel 14 that is part of an on-center pallet downender 16. The trimming station 2 includes a hook arrangement 8 and a number of trimming robots 10. As shown in FIG. 1A, the coil 12 is brought to the downender 16 after being processed. The area surrounding mandrel 14 includes a number of lasers to measure and ensure accurate centering of the coils. A hook arrangement 8 is provided that interfaces with the mandrel 14 so as to transfer the coils, as shown in FIG 1B, to the trimming station 2, as shown in FIG. 1C. The hook arrangement 8 allows the ends of the coil to be spread out to enable trimming of the desired number of head and tail end rings once at the trimming station 2.

There are a number of cameras 6 used as part of a vision system to detect the shape and edges of the coils. At the trimming station 2, the cameras are mounted on rails 18 allowing for easy movement across the coil 12. The trimming robots 10 help spread the ends of the coil 12 to expose the rings laid within. The vision system analyzes these rings using the cameras 6 to correctly identify the number of rings and their respective positions. Using information detected by the vision system, the trimming robots 10 correctly identify the number of rings to be trimmed from each coil. The trimming robots have selective shears specifically designed for trimming.

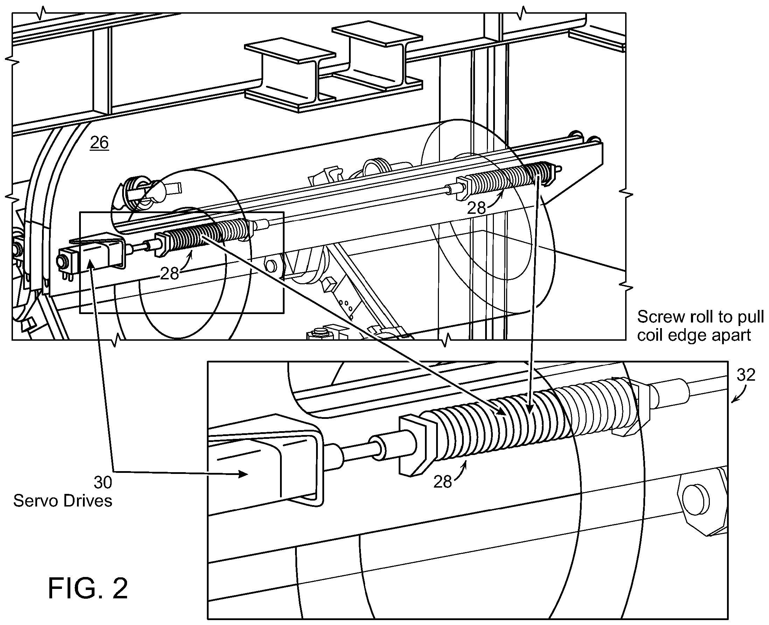

FIG. 2 is a schematic diagram illustrating a detailed view of the hook arrangement 26. The hook arrangement 26 includes a number of screw rolls 28 that are attached on each of its sides. Once the hook arrangement 26 transfers the coil to the trimming station, the screw rolls 28 are used to pull the ends of the coil a certain distance to produce ring separation via one of the trimming robots. A number of servo drives 30 on each side of the hook arrangement are used to pull automatically the end of the coil. The vision system calculates the number of rings at the ring separation and instructs the robotic arms to position the ring/rings to be cut at the shear locations. The inset 32 shows a detailed view of the screw rolls used in accordance with the invention. The vision system and trimming robots communicate with each other via a wireless or wired control system to coordinate the identification and trimming operation.

Alternatively the fanning of the coil rings may be carried out by the robot itself, using a custom trimming tool, that is designed in a way to allow multipurpose use, the tool incorporates a fanning tool, the afore mentioned cutting tool and a clamping tool, to carry the cut rings to a discard position

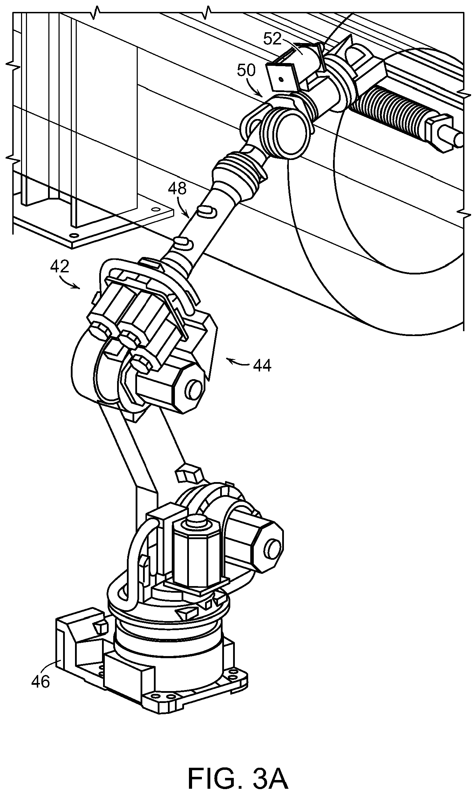

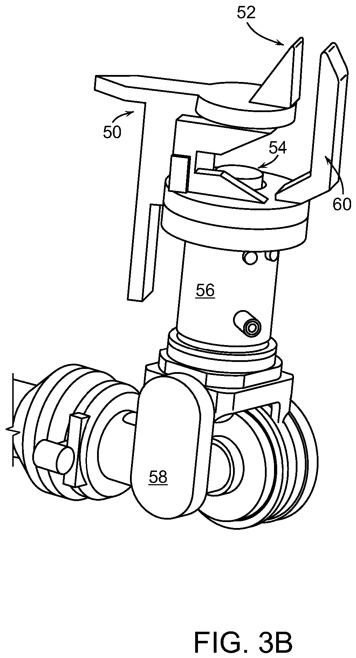

FIG. 3A is a schematic diagram illustrating a detailed view of a trimming robot 42 used in accordance with the invention. The trimming robot 42 includes an arm arrangement 44 that is coupled to a stationary surface via a stabilizer system 46. The arm arrangement 44 is coupled to a rotating shaft 48. The rotating shaft 48 is coupled to a lance and shear mechanism 50. FIG. 3B shows a detailed view of the lance and shear mechanism 50. The lance and shear mechanism 50 includes a lance 52 used to fan or separate the coils and a cutter mechanism 54 is used for trimming a coil. A grip item 60 is also included. The lance 52 and cutter and grip mechanism 54 are both positioned on a rotatable shaft 56 permitting the lance 52, the cutter mechanism 54, and the grip item 60 to rotate when in operation. The rotatable shaft 56 is positioned on an anchor mechanism 58 that permits the lance 52, the cutter mechanism 54, and the grip item 60 to move laterally when in operation.

The trimming robot 42 is a 6 axis unit that allows for flexible motion within 6 degrees of freedom. As discussed earlier, the trimming robot 42 works using information collected by one or more of the cameras 52 of the vision system to determine the appropriate positions to cut rings at various shear locations.

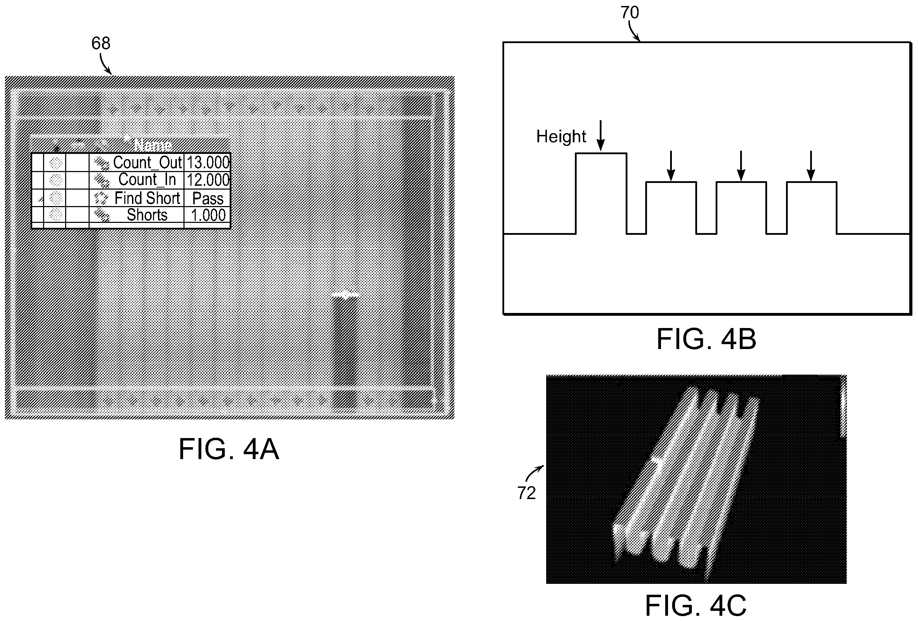

FIGs. 4A-4C are schematic diagrams illustrating the various operations of the vision system. FIG. 4A shows the profile 68 of the various coil ends positioned between the ring separation. The position of each ring is indexed by its location and sent to a controller. The controller uses this information to control the accurate positioning of trimming robots for shearing. FIG. 4B shows the edge/object detection 70 developed by the vision system to detect the appropriate edges of the rings. This information is provided to the controller for processing. FIG. 4C shows the depth of the field 72 of the rings being examined and the vision system provides this information to the controller . After receiving the various information mentioned above by the vision system, the controller evaluates the information and send respective commands to the trimming robots as to which of the evaluated rings are to be sheared and discarded.

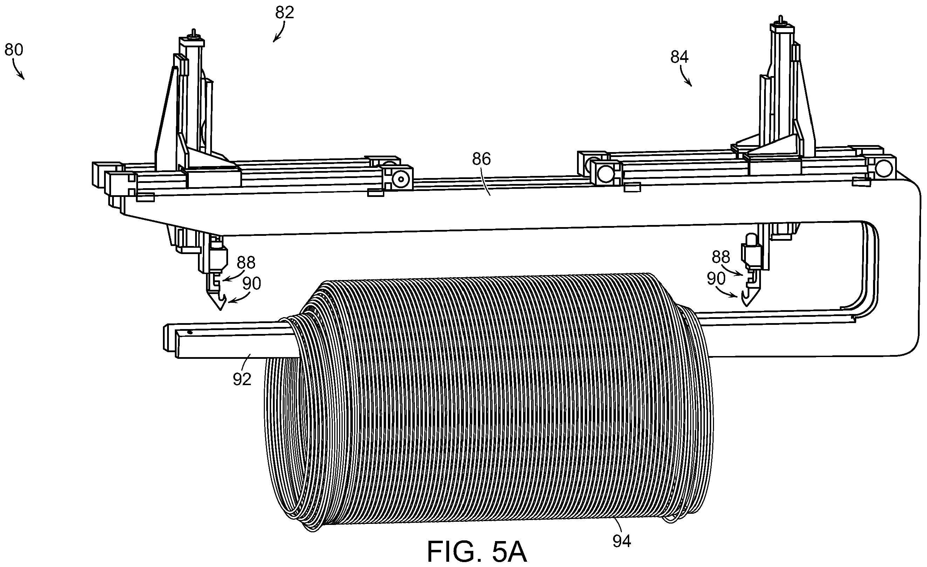

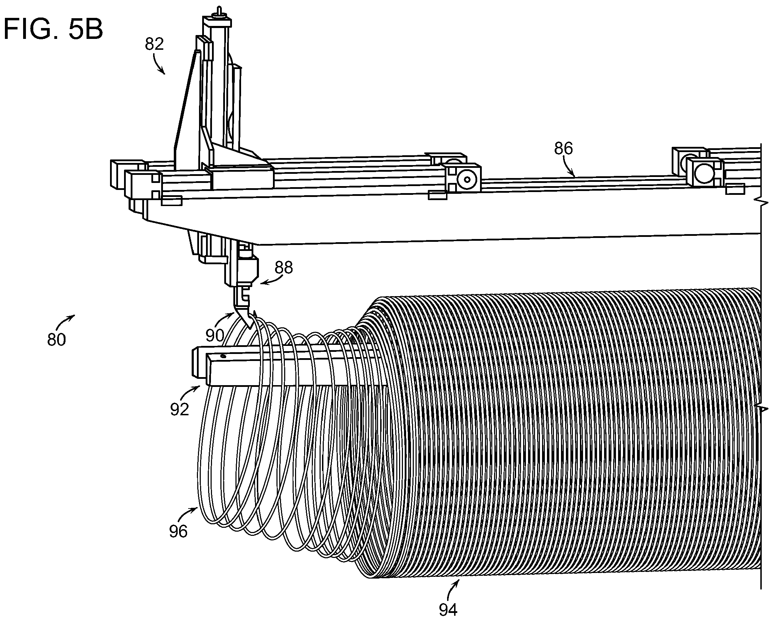

FIGs. 5A-5C are schematic diagrams illustrating another embodiment of the invention. This embodiment 80 uses a pair of trimming systems 82, 84 positioned on a rail 86 that is placed above a hook arrangement 90 and a coil 94 that allows for easy movement, as shown in FIG. 5A. The hook arrangement 90 performs similarly like the aforementioned hook arrangement 8. In particular, the hook system 90 places the coil 94 in a trimming station for further processing. Each trimming system 82, 84 includes a wire cutter 88 and a hook assembly 90. Moreover, the hook assembly 90 of the trimming systems 82 is hooked to the edge of the coil 94 so as to separate the rings 96 over a latch 92 of the hook arrangement 90, as shown in FIG. 5B. The same occurs for the other trimming system 84 where the trimming systems 82, 84 are both separating the rings 96 on both ends of the coil 94 simultaneously or separately over the latch 92.

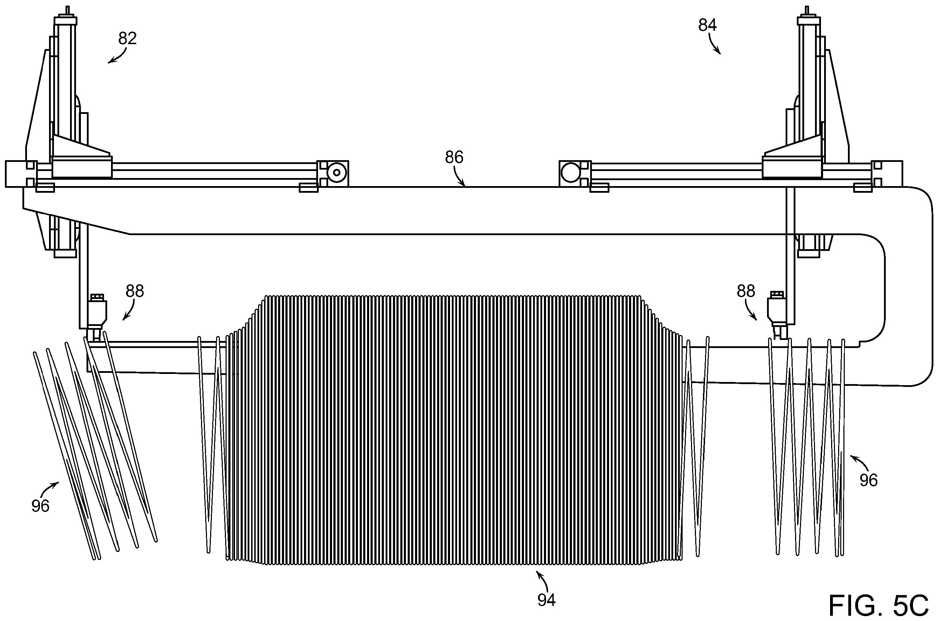

After placing the rings 96 on the latch 92, the trimming systems 82, 84 trim or cut respective ring 96 at selective locations using their wire cutters 88 at both ends of the coil 94, as shown in FIG. 5C. The determination of these specified locations is provided to the trimming systems 82, 84 by the vision system described herein. A controller is used to interface between the trimming systems 82, 84 and vision system for cutting or trimming the rings 96.

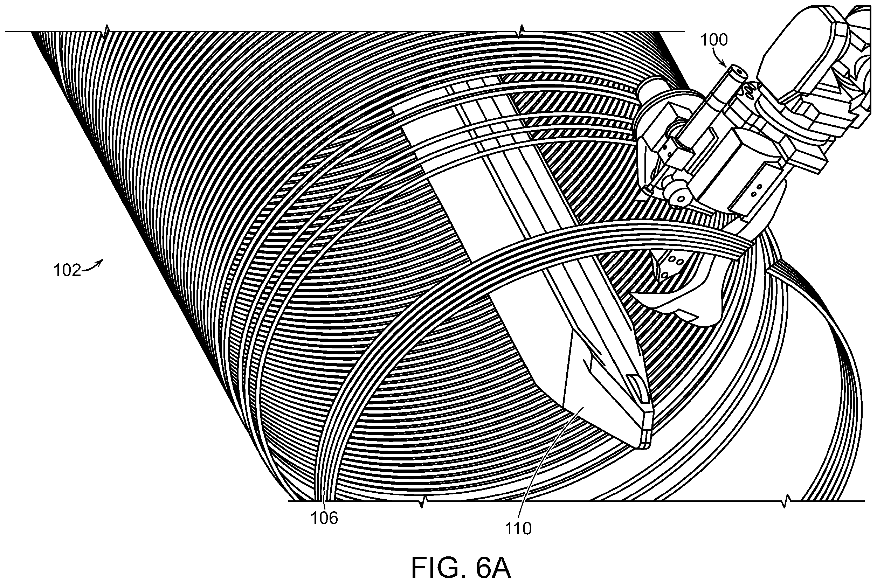

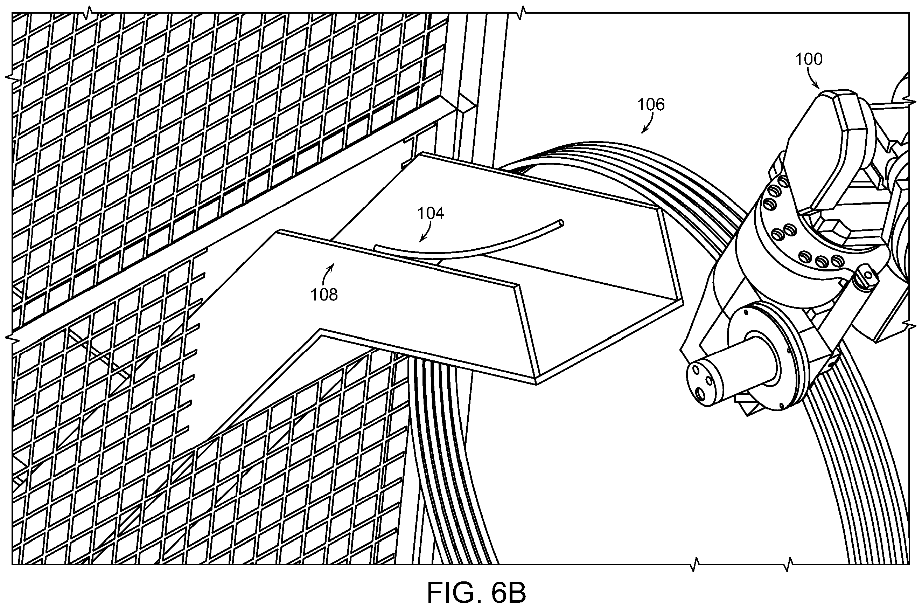

FIGs. 6A-6B shows another embodiment of the invention where a sample of a coil is gathered for a quality test. FIG. 6A shows a trimming robot 100 selecting a predefined number of rings 106 from a coil 102 that is positioned on a hook 110. A gripper rollers assembly, that is a part of end effector, allow variation in length of sample to be cut. FIG. 6B shows the trimming robot 100 trimming a sample 104 from the coils and a receiver unit 108 receives the sample 104. A controller coupled to the trimming robot 100 provides the trim locations for trimming the sections of the rings 106 forming the sample 104. Also, the sample 104 is later analyzed for its metallurgical or mechanical properties to determine if it meets a certain quality. The testing of the sample 104 can occur at the other end of the receiver unit 108 or user can manually pick up the sample from the receiver unit and perform the necessary testing, or can make use of an automated system for picking up and testing the sample. The receiver unit 108 can include an inclined structure such as channel or a slide structure, or the like. Also, the invention does allow for more than one trimming robot 100 to select samples at different points of a coiled system for testing.

Although the present invention has been shown and described with respect to several preferred embodiments thereof, various changes, omissions and additions to the form and detail thereof, may be made therein, without departing from the scope of the appended claims.

## Claims

1. An automated trimming system for a coil (12, 94) comprising a number of rings (96) positioned within said coil (12, 94), the system comprising:
- one or more trimming mechanisms (10) configured to proceed to cut the rings at sheared positions of said rings (96); and
- a hook arrangement (8, 26, 90) configured to interface with the coil (12, 94) for transferring the coil (12, 94) to a trimming area,
- screw rolls (28) or the one or more trimming mechanisms (10) configured to separate the ends of the coil (12, 94) in order to expose the rings (96) positioned within said coil (12, 94) once the coil (12, 94) is positioned in the trimming area;
the automated trimming system being **characterized in that** it further comprises
- a vision system (6) configured to identify the number of rings (96) positioned within said coil (12, 94) and the sheared positions where the rings (96) need to be cut;
- said one or more trimming mechanisms (10) being configured to receive the sheared positions.

2. The automated trimming system of claim 1, wherein the hook arrangement is configured to interface with a coil handling area to transfer the coil to the trimming area.

3. The automated trimming system of claim 1, wherein the screw rolls (28) are positioned on the sides of the hook arrangement (8, 26, 90).

4. The automated trimming system of claim 1, wherein the vision system (6) comprises a plurality of cameras (6).

5. The automated trimming system of claim 4, wherein the cameras (6) are positioned on a rail (18) to allow examination of the rings (96) positioned within the separated ends of the coil (12, 94)..

6. The automated trimming system of claim 1, wherein the vision system (6) is configured to produce a profile (68) of the exposed rings (96).

7. The automated trimming system of claim 1, wherein the vision system (6) is configured to detect edges of the exposed coils (12, 94).

8. The automated trimming system of claim 1, wherein the vision system (6) is configured to produce a depth of field (72) view of the exposed coils (12, 94) .

9. The automated trimming system of claim 1, wherein the one or more trimming mechanisms (10) comprises one or more trimming robots(10).

10. The automated trimming system of claim 9, wherein the one or more trimming robots (10, 100) are configured to receive commands for shearing the exposed rings via a controller.

11. The automated trimming system of claim 9, wherein the one or more trimming robots (10, 100) are configured to fan the rings to be trimmed.

12. The automated trimming system of claim 1, wherein the one or more trimming mechanisms (10) comprise a wire cutter (88) and a hook assembly (90).

13. The automated trimming system of claim 12, wherein the hook assembly (90) is configured to separate the coil (12, 94) to expose the rings (96).

14. The automated trimming system of one of claims 1-13 comprising:
- said coil (12, 94) that includes a plurality of rings (96);
- said one or more trimming mechanisms (10) configured to select a number of rings (96) from the coil (12, 94) and to proceed to form a sample (104) of desired length, by cutting a portion of the rings (96); and
- a receiver unit (108) configured to receive the sample (104) from the one or more trimming mechanisms (10) for evaluation of the quality of the sample (104).

15. The automated trimming system of claim 14, wherein the coil are positioned on a support structure.

16. The automated trimming system of one of claims 14-15, further comprising a controller configured to predefine the number of rings (96) selected by the one or more trimming mechanisms (10) .

17. The automated trimming system of one of claims 14-16, wherein the receiver unit (108) comprises an inclined structure.

18. The automated trimming system of claim 17, wherein the inclined structure comprises a channel or slide structure.

## Patentansprüche

1. Automatisiertes Schneidsystem für eine Wendel (12, 94), eine Anzahl von Ringen (96) umfassend, die in der Wendel (12, 94) positioniert sind, wobei das System Folgendes umfasst:
- einen oder mehrere Schneidmechanismen (10), die dafür gestaltet sind, zum Schneiden der Ringe an Scherpositionen der Ringe (96) vorzurücken, und
- eine Hakenanordnung (8, 26, 90), die dafür gestaltet ist, sich mit der Wendel (12, 94) zu koppeln, um die Wendel (12, 94) in einen Schneidbereich zu überführen,
- Schneckenrollen (28) oder den einen oder mehrerer Schneidmechanismen (10), die dafür gestaltet sind, die Enden der Wendel (12, 94) zu vereinzeln, um die Ringe (96) freizulegen, die in der Wendel (12, 94) positioniert sind, sobald die Wendel (12, 94) in dem Schneidbereich positioniert ist,
wobei das automatisierte Schneidsystem **dadurch gekennzeichnet ist, dass** es ferner Folgendes umfasst:
- ein Sichtsystem (6), das dafür gestaltet ist, die Anzahl von Ringen (96), die in der Wendel (12, 94) positioniert sind, und die Scherpositionen, an denen die Ringe zu schneiden sind, zu identifizieren,
- wobei der eine oder die mehreren Schneidmechanismen (10) dafür gestaltet sind, die Scherpositionen aufzunehmen.

2. Automatisiertes Schneidsystem nach Anspruch 1, wobei die Hakenanordnung dafür gestaltet ist, sich mit einem Wendelhandhabungsbereich zu koppeln, um die Wendel in den Schneidbereich zu überführen.

3. Automatisiertes Schneidsystem nach Anspruch 1, wobei die Schneckenrollen (28) an den Seiten der Hakenanordnung (8, 26, 90) positioniert sind.

4. Automatisiertes Schneidsystem nach Anspruch 1, wobei das Sichtsystem (6) mehrere Kameras (6) umfasst.

5. Automatisiertes Schneidsystem nach Anspruch 4, wobei die Kameras (16) an einer Schiene (18) positioniert sind, um eine Prüfung der Ringe (96) zu ermöglichen, die in dem vereinzelten Enden der Wendel (12, 94) positioniert sind.

6. Automatisiertes Schneidsystem nach Anspruch 1, wobei das Sichtsystem (6) dafür gestaltet ist, ein Profil (68) der freigelegten Ringe (96) zu produzieren.

7. Automatisiertes Schneidsystem nach Anspruch 1, wobei das Sichtsystem (6) dafür gestaltet ist, Ränder der freigelegten Wendeln (12, 94) zu erkennen.

8. Automatisiertes Schneidsystem nach Anspruch 1, wobei das Sichtsystem (6) dafür gestaltet ist, eine Tiefenschärfeansicht (72) der freigelegten Wendeln (12, 94) zu produzieren.

9. Automatisiertes Schneidsystem nach Anspruch 1, wobei der eine oder die mehreren Schneidmechanismen (10) einen oder mehrere Schneidroboter (10) umfassen.

10. Automatisiertes Schneidsystem nach Anspruch 9, wobei der eine oder die mehreren Schneidroboter (10, 100) dafür gestaltet sind, über eine Steuerung Befehle zum Abscheren der freigelegten Ringe zu empfangen.

11. Automatisiertes Schneidsystem nach Anspruch 9, wobei der eine oder die mehreren Schneidroboter (10, 100) dafür gestaltet sind, die zu schneidenden Ringe aufzufächern.

12. Automatisiertes Schneidsystem nach Anspruch 1, wobei der eine oder die mehreren Schneidmechanismen (10) einen Drahtschneider (88) und eine Hakenanordnung (90) umfassen.

13. Automatisiertes Schneidsystem nach Anspruch 12, wobei die Hakenanordnung (90) dafür gestaltet ist, die Wendel (12, 94) zu vereinzeln, um die Ringe (96) freizulegen.

14. Automatisiertes Schneidsystem nach einem der Ansprüche 1 bis 13, Folgendes umfassend:
- die Wendel (12, 94), die mehrere Ringe (96) beinhaltet,
- den einen oder die mehreren Schneidmechanismen (10), die dafür gestaltet sind, eine Anzahl von Ringen (96) von der Wendel (12, 94) auszuwählen und vorzurücken, um durch Schneiden eines Abschnitts der Ringe (96) eine Probe (104) von gewünschter Länge zu bilden, und
- eine Aufnehmereinheit (108), die dafür gestaltet ist, die Probe (104) von dem einen oder den mehreren Schneidmechanismen (10) zur Bewertung der Qualität der Probe (104) aufzunehmen.

15. Automatisiertes Schneidsystem nach Anspruch 14, wobei die Wendel auf einer Stützstruktur positioniert ist.

16. Automatisiertes Schneidsystem nach einem der Ansprüche 14 bis 15, ferner eine Steuerung umfassend, die dafür gestaltet ist, die Anzahl von Ringen (96) vorzudefinieren, die von dem einen oder den mehreren Schneidmechanismen (10) ausgewählt wird.

17. Automatisiertes Schneidsystem nach einem der Ansprüche 14 bis 16, wobei die Aufnehmereinheit (108) eine geneigte Struktur umfasst.

18. Automatisiertes Schneidsystem nach Anspruch 17, wobei die geneigte Struktur einen Kanal oder eine Gleitstruktur umfasst.

## Revendications

1. Système automatique de découpe destiné à une bobine (12, 94) comportant un certain nombre d'anneaux (96) disposés à l'intérieur de ladite bobine (12, 94), le système comportant :
- un ou plusieurs mécanismes de découpe (10) conçus pour découper les anneaux à des positions de cisaillement desdits anneaux (96) ; et
- un ensemble de crochets (8, 26, 90) conçu pour s'interfacer avec la bobine (12, 94) pour transférer la bobine (12, 94) vers une zone de découpe,
- des rouleaux d'hélice (28) ou le ou les quelques mécanisme/s de découpe (10) conçus pour séparer les extrémités de la bobine (12, 94) afin d'exposer les anneaux (96) placés au sein de ladite bobine (12, 94) une fois que la bobine (12, 94) est positionnée dans la zone de découpe ;
le système automatique de découpe étant **caractérisé en ce qu'**il comporte par ailleurs
- un système de vision (6) conçu pour identifier le nombre d'anneaux (96) disposés au sein de la bobine (12, 94) et les endroits de cisaillement auxquels les anneaux (96) doivent être découpés ;
- le ou les mécanisme/s de découpe (10) étant conçu/s pour recevoir les positions de cisaillement.

2. Système automatique de découpe selon la revendication 1, dans lequel l'ensemble de crochets est conçu pour s'interfacer avec une zone de manipulation de bobine pour transférer la bobine vers la zone de découpe.

3. Système automatique de découpe selon la revendication 1, dans lequel les rouleaux d'hélice (28) sont placés de part et d'autre de l'ensemble de crochets (8, 26, 90).

4. Système automatique de découpe selon la revendication 1, dans lequel le système de vision (6) comprend plusieurs caméras (6).

5. Système automatique de découpe selon la revendication 4, dans lequel les caméras (6) sont placées sur un rail (18) afin de permettre l'examen les anneaux (96) placés au sein des extrémités séparées de la bobine (12, 94).

6. Système automatique de découpe selon la revendication 1, dans lequel le système de vision (6) est conçu pour fournir un profil (68) des anneaux exposés (96).

7. Système automatique de découpe selon la revendication 1, dans lequel le système de vision (6) est conçu pour détecter les bords des bobines exposées (12, 94).

8. Système automatique de découpe selon la revendication 1, dans lequel le système de vision (6) est conçu pour fournir une vue de profondeur de champ (72) des bobines exposées (12, 94).

9. Système automatique de découpe selon la revendication 1, dans lequel ledit ou lesdits mécanisme/s de découpe (10) comprend/comprennent un ou plusieurs robot/s de découpe (10) .

10. Système automatique de découpe selon la revendication 9, dans lequel ledit ou les robot/s de découpe (10, 100) est/sont conçu/s pour recevoir des ordres de cisaillement des anneaux exposés par l'intermédiaire d'un mécanisme de commande.

11. Système automatique de découpe selon la revendication 9, dans lequel ledit ou lesdits mécanisme/s de découpe (10, 100) est/sont conçu/s pour éventer les anneaux prévus d'être découpés.

12. Système automatique de découpe selon la revendication 1, dans lequel ledit ou lesdits mécanisme/s de découpe (10) comporte/nt un coupe-fil (88) et un ensemble de crochets (90) .

13. Système automatique de découpe selon la revendication 12, dans lequel l'ensemble de crochets (90) est conçu pour séparer la bobine (12, 94) pour exposer les anneaux (96).

14. Système automatique de découpe selon l'une quelconque des revendications 1 à 13, comportant :
- ladite bobine (12, 94) incluant une pluralité d'anneaux (96) ;
- ledit ou lesdits mécanismes de découpe (10) conçu/s pour sélectionner un nombre d'anneaux (96) de la bobine (12, 94) et pour configurer un échantillon (104) d'une longueur désirée en découpant une portion des anneaux (96) ; et
- une unité de réception (108) conçue pour recevoir l'échantillon (104) dudit ou desdits mécanisme/s de découpe (10) pour évaluer la qualité de l'échantillon (104) .

15. Système automatique de découpe selon la revendication 14, dans lequel la bobine est disposée sur une structure de soutien.

16. Système automatique de découpe selon l'une des revendications 14 à 15, comportant : un mécanisme de commande apte à prédéfinir le nombre d'anneaux (96) sélectionné par ledit ou lesdits mécanisme/s de découpe (10) .

17. Système automatique de découpe selon l'une quelconque des revendications 14 à 16, dans lequel l'unité de réception (108) présente une structure inclinée.

18. Système automatique de découpe selon la revendication 17, dans lequel la structure inclinée comporte une structure de canal ou de glissière
